# EUROPEAN PATENT SPECIFICATION

(11) **EP 3 231 881 B1**
(45) Date of publication and mention of the grant of the patent: **12.06.2019**
(21) Application number: 17155336.5
(22) Date of filing: 09.02.2017
(51) Int. Cl.: C22C 19/05, B23K 35/30

(54) **BRAZE MATERIAL FOR HYBRID STRUCTURES**
HARTLÖTMATERIAL ZUM HYBRIDSTRUKTUREN
MATÉRIAU DE BRASAGE DE STRUCTURES HYBRIDES

(30) Priority: 11.04.2016 US 201615095914
(43) Date of publication of application: 18.10.2017
(73) Proprietor: United Technologies Corporation, Farmington, CT 06032 (US)
(72) Inventor: Bochiechio, Mario P., Vernon, CT 06066 (US); Szela, Edward R., West Springfield, MA 01089 (US); Lin, Wangen, S. Glastonbury, CT 06073 (US); Raghavan, Aswin, West Hartford, CT 06119 (US)
(74) Representative: Dehns

(56) References cited:
- EP-A1- 0 800 889
- EP-A1- 1 623 787
- EP-A1- 2 628 810
- EP-A2- 1 226 896
- EP-A2- 2 113 333
- WO-A1-92/13979
- US-A1- 2007 029 369

## Description

### BACKGROUND

This disclosure relates to nickel based superalloys. In particular this disclosure relates to superalloys used in high temperature gas turbine engine components such as turbine discs and compressor discs.

In operation, the turbine discs encounter different operating conditions radially from the center or hub portion to the exterior or rim portion. The rim is hotter than the hub and, in general, all of the operating temperatures are higher for more advanced engines. The stress conditions also vary radially, with lower stresses at the rim and higher stresses at the hub. As a result of different operating conditions, the material at the rim of the disc must exhibit good high temperature creep and stress rupture resistance as well as high temperature strength and hold time fatigue crack growth resistance. The hub region of the disc must exhibit high tensile strength at more moderate temperatures and resistance to low cycle fatigue crack growth. In the most common designs, the entire turbine disc is made of a single forged and heat treated piece of material. The alloy used in the disc is therefore selected to meet all of the material requirements discussed above.

Exotic materials have been developed to address the demands of turbine disc use. U.S. Patent No. 6,521,175 (the '175 patent) discloses an advanced nickel based superalloy for powder metallurgical (PM) manufacture of turbine discs. The disclosure of the '175 patent is incorporated by reference herein in its entirety. The '175 patent discloses disc alloys optimized for short time engine cycles, with disc temperatures approaching temperatures of about 1500°F (816°C). U.S. Pat. App. Pub. 2010/0008790 discloses a nickel based disc alloy having a relatively high concentration of tantalum coexisting with a relatively high concentration of one or more other components. Other disc alloys are disclosed in U.S. Patent No. 5,104,614, U.S. Patent No. 5,662,749, U.S. Patent No. 6,908,519, EP 1,201,777, and EP 1,195,446.

EP 0800889 describes a braze material for repairing an article.

It is advantageous in some instances to use different materials for a disc hub and rim to maximize performance.

### SUMMARY

A nickel braze alloy may include less than 2.0 wt. % aluminum, 18.0-23.0 wt. % cobalt, 12.0-15.0 wt. % chromium, 3.8-4.5 wt. % molybdenum, 0.8-1.5 wt. % niobium, 1.8-3.0 wt. % tantalum, less than 2.0 wt. % titanium, 2.0-3.5 wt. % tungsten, 0.8-1.2 wt. % boron, 0.02-0.10 wt. % carbon, 0.03-0.06 wt. % zirconium, and a balance of nickel and minor amounts of impurities.

In an embodiment a method of joining a first superalloy component with a first joining surface to a second superalloy component with a second joining surface along the matching joining surfaces includes forming an assembly wherein the first component and the second component are positioned such that the first and second joining surfaces face each other with a layer of transient liquid phase brazing alloy therebetween (e.g. an alloy as described herein) having with the following composition: less than 2.0 wt. % aluminum, 18.0-23.0 wt. % cobalt, 12.0-15.0 wt. % chromium, 3.8-4.5 wt. % molybdenum, 0.8-1.5 wt. % niobium, 1.8-3.0 wt. % tantalum, less than 2.0 wt. % titanium, 2.0-3.5 wt. % tungsten, 0.8-1.2 wt. % boron, 0.02-0.10 wt. % carbon, 0.03-0.06 wt. % zirconium, and a balance of nickel and minor amounts of impurities on the first and/or second joining surfaces. The assembly is then heated to a predetermined temperature such that the transient liquid phase brazing alloy melts and the first and second superalloy joining surfaces do not melt. The assembly is then held at the predetermined temperature for a predetermined amount of time wherein the brazing alloy isothermally solidifies and forms a metallurgical bond between the first and second superalloy components.

### BRIEF DESCRIPTION OF THE DRAWINGS

FIG. 1 is an exploded partial view of a gas turbine disc.
FIG. 2 is a flow diagram of an exemplary process of forming the gas turbine disc of FIG. 1.
FIG. 3 is an exploded partial view of a hybrid disc assembly according to an embodiment of the invention.
FIG. 4 is a flow diagram of a process for forming the hybrid disc assembly of FIG. 3 using a transient liquid phase brazing alloy according to an embodiment of the invention.

### DETAILED DESCRIPTION

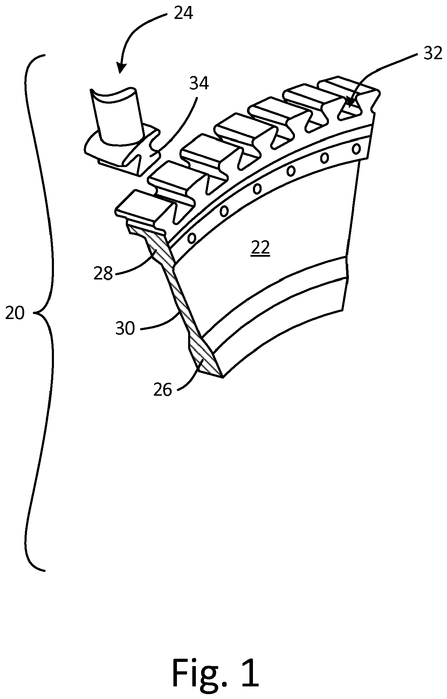

FIG. 1 is an exploded partial view of a gas turbine engine disc assembly 20 including a disc 22 and one of a plurality of blades 24. The disc 22 is generally annular, extending from an inboard bore or hub 26 at a central aperture to an outboard rim 28. A relatively thick web 30 extends radially between the bore 26 and rim 28. The periphery of the rim 28 has a circumferential array of engagement features 32 (e.g. dovetail slots) for engaging complementary features 34 of the blades 24. In other embodiments, the disc or blades may be a unitary structure (e.g. so called "integrally bladed" rotors or discs).

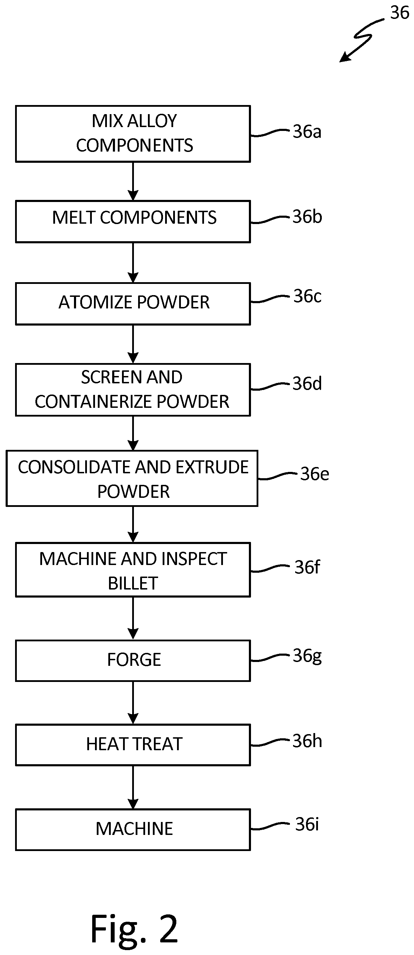

The disc 22 may be formed by a powder metallurgical forging process (e.g., as indicated in U.S. Patent No. 6,521,175). FIG. 2 is a flow diagram of exemplary process 36. The elemental components of the alloy are mixed (e.g. as individual components of refined purity or alloys thereof) (step 36a). The mixture is melted sufficiently to eliminate component segregation (step 36b). The melted mixture is atomized to form droplets of molten metal cool and solidify into powder particles (step 36c). The powder may be screened to restrict the ranges of powder particle sizes allowed. The powder is consolidated in a multi-step process involving screening and containerizing (step 36d). In the next step the container is compacted to consolidate the powder and the hot material is extruded (step 36e). The resulting extruded powder then has reached near full theoretical density of the alloy without the chemical segregation typical of larger castings. The extruded billet is then machined and inspected (step 36f). A billet of the consolidated powder may then be forged at appropriate temperatures and deformation constraints to provide a forging with the basic disc profile (step 36g). The forging is then heat treated in a multi-step process involving high temperature heating followed by a rapid cooling process or quench (step 36h). Preferably the heat treatment optimizes the characteristic gamma (γ) grain size from an exemplary 10 micron or less to an exemplary 20-120 micron (with 30-60 micron being preferred). The final step is to machine the forging to produce a useful part (step 36i).

The quench for the heat treatment may also form strengthening precipitates of a desired distribution of sizes and desired volume percentages. Subsequent heat treatments are used to modify these distributions to produce the requisite mechanical properties of the manufactured forging. Increased grain size is associated with good high temperature creep resistance and decreased rate of crack growth during the service of the manufactured forging. The heat treated forging is then subject to machining of the final profile and the slots.

The alloy series described in the '175 alloy series patent forms a disc product with exceptional bore strength. Recent alloy series described in commonly owned U.S. Pat. App. Pubs. 2013/0209265 (the '265 alloy series) and 2013/02109266 (the '266 alloy series), which are incorporated herein by reference in their entirety, disclose alloys with improved high temperature creep and rupture lives over prior art alloys. Hybrid disc structures with '175 alloy series bores and '265 and/or '266 alloy series rim structures can provide improved performance over single-material disc structures.

The '175 alloy series bore composition comprises about 2.6-4.8 wt. % aluminum, about 16.0-22.4 wt. % cobalt, about 6.6-14.3 wt. % chromium, about 1.9-3.9 wt. % molybdenum, about 0.9-3.0 wt. % niobium, about 1.4-3.5 wt. % tantalum, about 2.4-4.6 wt. % titanium, about 1.9-4.0 wt. % tungsten, about 0.02-0.10 wt. % boron, about 0.02-0.10 wt. % carbon, about 0.03-0.10 wt. % zirconium, and a balance of nickel and minor amounts of impurities.

The '265 alloy series rim composition comprises about 3.10-3.75 wt. % aluminum, about 20.0-22.0 wt. % cobalt, about 9.5-11.25 wt. % chromium, about 2.8-4.2 wt. % molybdenum, about 1.6-2.4 wt. % niobium, about 4.2-6.1 wt. % tantalum, about 2.6-3.5 wt. % titanium, about 1.8-2.5 wt. % tungsten, about 0.02-0.09 wt. % boron, about 0.02-0.09 wt. % carbon, about 0.04-0.09 wt. % zirconium, and a balance of nickel and minor amounts of impurities.

The '266 alloy series rim composition comprises about 3.2-4.1 wt. % aluminum, about 20.0-22.0 wt. % cobalt, about 8-10.5 wt. % chromium, about 2.8-3.1 wt. % molybdenum, about 1.6-2.4 wt. % niobium, about 2.5-7.3 wt. % tantalum, about 2.6-3.6 wt. % titanium, about 2.8-3.3 wt. % tungsten, about 0.02-0.09 wt. % boron, about 0.02-0.09 wt. % carbon, about 0.04-0.09 wt. % zirconium, and a balance of nickel and minor amounts of impurities.

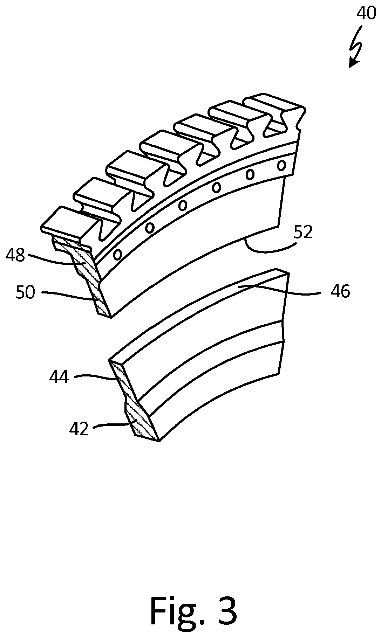

FIG. 3 is an exploded view of a hybrid disc structure with separate bore and rim alloy components. Hybrid disc structure 40 includes inboard hub section 42, inboard web section 44 and hub joining surface 46. Hybrid disc structure 40 further comprises outboard rim section 48, outboard web section 50 and outboard rim joining surface 52. Hybrid disc structure 40 may be formed by joining outboard rim section 48 to inboard hub section 44 along joining surfaces 46 and 52 by joining methods well known in the art including welding, friction welding, inertia bonding, and other methods known in the art. A preferred joining method is brazing, in particular, transient liquid phase (TLP) brazing.

Advanced TLP braze alloys to join '175 hub alloys to '265 and/or '266 rim alloys to form hybrid disc structure 40 are the subject of the present disclosure. Prior art commercially available TLP braze alloys for superalloys are eutectic compositions of nickel, chromium, and boron, a melting point depressant. During brazing, the structure is heated to a fixed temperature exceeding the melting point of the braze alloy but not above the melting points of the two structures being joined. Maintaining the brazing temperature at a fixed temperature allows boron to defuse away from the joint and into the surrounding structure. As the braze alloy loses boron, the melting temperature increases until the braze alloy isothermally solidifies and forms a metallurgical bond.

Prior art brazing alloys could result in a weak bond as a result of the limited diffusion of solid solution strengtheners such as niobium, titanium and tungsten and the limited formation of gamma prime as a result of limited mean free path of diffusion of large atoms such as aluminum, titanium, tantalum, and niobium.

In an embodiment of the invention, a preferred brazing alloy composition (e.g. for brazing superalloy disc structures) includes less than 2.0 wt. % aluminum, 18.0-23.0 wt. % cobalt, 12.0-15.0 wt. % chromium, 3.8-4.5 wt. % molybdenum, 0.8-1.5 wt. % niobium, 1.8-3.0 wt. % tantalum, less than 2.0 wt. % titanium, 2.0-3.5 wt. % tungsten, 0.8-1.2 wt. % boron, 0.02-0.10 wt. % carbon, 0.03-0.06 wt. % zirconium, and a balance of nickel and minor amounts of impurities.

A preferred brazing alloy within this range has a composition that includes less than 1.8 wt. % aluminum, 20.0-22.0 wt. % cobalt, 13.0-14.5 wt. % chromium, 3.9-4.3 wt. % molybdenum, 0.9-1.0 wt. % niobium, 2.0-2.5 wt. % tantalum, less than 1.95 wt. % titanium, 2.1-3.0 wt. % tungsten, 0.9-1.1 wt. % boron, 0.04-0.06 wt. % carbon, 0.04-0.06 wt. % zirconium, and a balance of nickel and minor amounts of impurities.

A particularly preferred braze alloy within this range has a composition that includes 21.90 wt. % cobalt, 14.00 wt. % chromium, 4.10 wt. % molybdenum, 0.97 wt. % niobium, 2.58 wt. % tantalum, 2.26 wt. % tungsten, 1.00 wt. % boron, 0.05 wt. % carbon, 0.05 wt. % zirconium, and a balance of nickel and minor amounts of impurities.

Another particularly preferred braze alloy within this range has a composition that includes 1.73 wt. % aluminum, 21.10 wt. % cobalt, 13.48 wt. % chromium, 3.94 wt. % molybdenum, 0.93 wt. % niobium, 2.45 or 2.48 wt. % tantalum, 1.92 wt. % titanium, 2.18 wt. % tungsten, 1.00 wt. % boron, 0.05 wt. % carbon, 0.05 wt. % zirconium, and a balance of nickel and minor amounts of impurities.

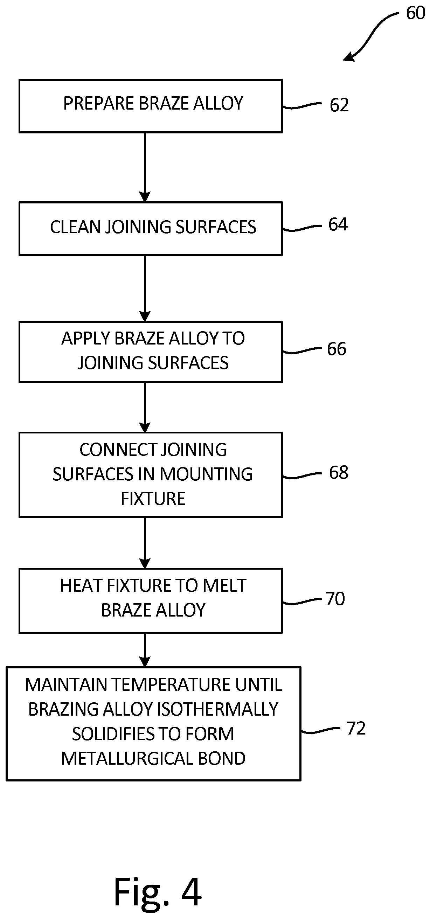

FIG. 4 is a flow diagram illustrating process 60 for forming hybrid disc structure 40 (FIG. 3) by transient liquid phase brazing the invention is outlined in FIG. 4. In the first step, the braze alloy is prepared (step 62). The braze alloy may be prepared by a number of processes known in the art. A preferred process is that described in the '175 patent where the braze alloy may be formed into a powder by gas or vacuum atomization. The powder may then be formed into a paste or slurry or may be consolidated into a billet for further deformation processing into foils. In preparation for joining, matching joining surfaces 46 and 52 may be cleaned by procedures known to those in the art (step 64). The braze alloy in paste, slurry, foil form or other forms known to those in the art may be applied to one or both joining surfaces. In an exemplary embodiment, braze alloy in foil form is used (step 66). Outboard rim section 48 and inboard hub section 42 may then be assembled in a mounting fixture with joining surfaces 46 and 52 separated by braze alloy (step 68). Mechanical force may be applied to ensure joint integrity during brazing. The fixture may then be heated to a temperature greater than the melting temperature of the braze alloy but less than the melting temperature of the outboard rim section and inboard hub section under a protective atmosphere or vacuum to melt braze alloy (step 70). The brazing temperature may be maintained until the brazing alloy isothermally solidifies and forms a metallurgical bond.

### Discussion of Possible Embodiments

The following are non-exclusive descriptions of possible embodiments of the present invention.

A nickel braze alloy (e.g. for use in the method described herein) may include in combination less than 2.0 wt.% aluminum, 18.0-23.0 wt.% cobalt, 12.0-15.0 wt.% chromium, 3.8-4.5 wt.% molybdenum, 0.8-1.5 wt.% niobium, 1.8-3.0 wt.% tantalum, less than 2.0 wt.% titanium, 2.0-3.5 wt.% tungsten, 0.8-1.2 wt.% boron, 0.02-0.10 wt.% carbon, 0.03-0.06 wt.% zirconium and a balance of nickel and minor amounts of impurities.

The alloy of the preceding paragraph can optionally include, additionally and/or alternatively any, one or more of the following features, configurations and/or additional components:

The composition may include less than 1.8 wt.% aluminum, 20.0-22.0 wt.% cobalt, 13.0-14.5 wt.% chromium, 3.9-4.3 wt.% molybdenum, 0.9-1.0 wt.% niobium, 2.0-2.5 wt.% tantalum, less than 1.95 wt.% titanium, 2.1-3.0 wt.% tungsten, 0.9-1.1 wt.% boron, 0.04-0.06 wt.% carbon, 0.04-0.06 wt.% zirconium, and a balance of nickel and minor amounts of impurities.

The composition may include 21.90 wt.% cobalt, 14.00 wt.% chromium, 4.10 wt.% molybdenum, 0.97 wt.% niobium, 2.58 wt.% tantalum, 2.26 wt.% tungsten 1.00 wt.% boron, 0.05 wt.% carbon, 0.05 wt.% zirconium, and a balance of nickel and minor amounts of impurities.

The composition may include 1.73 wt.% aluminum, 21.10 wt.% cobalt, 13.48 wt.% chromium, 3.94 wt.% molybdenum, 0.93 wt.% niobium, 2.45 or 2.48 wt.% tantalum, 1.92 wt.% titanium, 2.18 wt.% tungsten, 1.00 wt.% boron, 0.05 wt.% carbon, 0.05 wt.% zirconium, and a balance of nickel and minor amounts of impurities.

The alloy may be a foil, tape, cloth, powder, or slurry.

The alloy may be a foil.

The foil may have a thickness of from 1.0 mils (2.54 microns) to 1.5 mils (38.1 microns).

A method of joining a first superalloy component with a first joining surface to a second superalloy component with a second joining surface along the matching joining surfaces may include: forming an assembly wherein the first component and the second component are positioned such that the first and second joining surfaces are facing each other with a layer of transient liquid phase brazing alloy therebetween having the following composition: less than 2.0 wt.% aluminum, 18.0-23.0 wt.% cobalt, 12.0-15.0 wt.% chromium, 3.8-4.5 wt.% molybdenum, 0.8-1.5 wt.% niobium, 1.8-3.0 wt.% tantalum, less than 2.0 wt.% titanium, 2.0-3.5 wt.% tungsten, 0.8-1.2 wt.% boron, 0.02-0.10 wt.% carbon, 0.03-0.06 wt.% zirconium, and a balance of nickel and minor amounts of impurities on the first and/or second joining surfaces; heating the assembly to a predetermined temperature such that the transient liquid phase brazing alloy melts and the first and second superalloy joining surfaces do not melt; and holding the assembly at the predetermined temperature for a predetermined amount of time wherein the brazing alloy isothermally solidifies and forms a metallurgical bond between the first and second superalloy components.

The method of the preceding paragraph can optionally include, additionally and/or alternatively any, one or more of the following features, configurations and/or additional components:
The transient liquid phase brazing alloy may have the following composition: less than 1.8 wt.% aluminum, 20.-22.0 wt.% cobalt, 13.0-14.5 wt.% chromium, 3.9-4.3 wt.% molybdenum, 0.9-1.0 wt.% niobium, 2.0-2.5 wt.% tantalum, less than 1.95 wt.% titanium, 2.1-3.0 wt.% tungsten, 0.9-1.7 wt.% boron, 0.04-0.06 wt.% carbon, 0.04-0.06 wt.% zirconium, and a balance of nickel and minor amounts of impurities.

The transient liquid phase brazing alloy may have the following composition: 21.90 wt.% cobalt, 14.00 wt.% chromium, 4.10 wt.% molybdenum, 0.97 wt.% niobium, 2.58 wt.% tantalum, 2.26 wt.% tungsten, 1.00 wt.% boron, 0.05 wt.% carbon, 0.05 wt.% zirconium, and a balance of nickel and minor amounts of impurities.

The transient liquid phase brazing alloy may have the following composition: 1.73 wt.% aluminum, 21.10 wt.% cobalt, 13.48 wt.% chromium, 3.94 wt.% molybdenum, 0.93 wt.% niobium, 2.45 or 2.48 wt.% tantalum, 1.92 wt.% titanium, 2.18 wt.% tungsten, 1.00 wt.% boron, 0.05 wt.% carbon, 0.05 wt.% zirconium, and a balance of nickel and minor amounts of impurities.

The transient liquid phase brazing alloy may be a foil, tape, cloth, powder, or slurry.

The transient liquid phase brazing alloy may be a foil.

The foil may have a thickness of from 1.0 mils (25.4 microns) to 1.5 mils (38.1 microns).

The first component may be an alloy with the following composition: 2.6-4.8 wt.% aluminum, 16.0-22.4 wt.% cobalt, 6.6-14-3 wt.% chromium, 1.9-3.9 wt.% molybdenum, 0.9-3.0 wt.% niobium, 1.4-3.5 wt.% tantalum, 2.4-4.6 wt.% titanium, 1.9-4.0 wt.% tungsten, 0.02-0.10 wt.% boron, 0.02-0.10 wt.% carbon, 0.03-0.10 wt.% zirconium, and a balance of nickel and minor amounts of impurities.

The second component may be an alloy with the following composition: 3.10-3.75 wt.% aluminum, 20.0-22.0 wt.% cobalt, 9.5-11.25 wt.% chromium, 2.8-4.2 wt.% molybdenum, 1.6-2.4 wt.% niobium, 4.2-6.1 wt.% tantalum, 2.6-3.5 wt.% titanium, 1.8-2.5 wt.% tungsten, 0.02-0.09 wt.% boron, 0.02-0.09 wt.% carbon, 0.04-0.09 wt.% zirconium, and a balance of nickel and minor amounts of impurities.

The second compound may be an alloy with the following composition: 3.2-4.1 wt. % aluminum, 20.0-22.0 wt. % cobalt, 8-10.5 wt. % chromium, 2.8-3.1 wt. % molybdenum, 1.6-2.4 wt. % niobium, 2.5-7.3 wt. % tantalum, 2.6-3.6 wt. % titanium, 2.8-3.3 wt. % tungsten, 0.02-0.09 wt. % boron, 0.02-0.09 wt. % carbon, 0.04-0.09 wt. % zirconium, and a balance of nickel and minor amounts of impurities.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A nickel braze alloy comprising in combination less than 2.0 wt. % aluminum, 18.0-23.0 wt. % cobalt, 12.0-15.0 wt. % chromium, 3.8-4.5 wt. % molybdenum, 0.8-1.5 wt. % niobium, 1.8-3.0 wt. % tantalum, less than 2.0 wt. % titanium, 2.0-3.5 wt. % tungsten, 0.8-1.2 wt. % boron, 0.02-0.10 wt. % carbon, 0.03-0.06 wt. % zirconium, and a balance of nickel and minor amounts of impurities.

2. The nickel braze alloy of claim 1, wherein the composition includes less than 1.8 wt. % aluminum, 20.0-22.0 wt. % cobalt, 13.0-14.5 wt. % chromium, 3.9-4.3 wt. % molybdenum, 0.9-1.0 wt. % niobium, 2.0-2.5 wt. % tantalum, less than 1.95 wt. % titanium, 2.1-3.0 wt. % tungsten, 0.9-1.1 wt. % boron, 0.04-0.06 wt. % carbon, 0.04-0.06 wt. % zirconium, and a balance of nickel and minor amounts of impurities.

3. The nickel braze alloy of claim 1, wherein the composition includes 21.90 wt. % cobalt, 14.00 wt. % chromium, 4.10 wt. % molybdenum, 0.97 wt. % niobium, 2.58 wt. % tantalum, 2.26 wt. % tungsten, 1.00 wt. % boron, 0.05 wt. % carbon, 0.05 wt. % zirconium, and a balance of nickel and minor amounts of impurities.

4. The nickel braze alloy of claim 1 or claim 2, wherein the composition includes 1.73 wt. % aluminum, 21.10 wt. % cobalt, 13.48 wt. % chromium, 3.94 wt. % molybdenum, 0.93 wt. % niobium, 2.48 wt. % tantalum, 1.92 wt. % titanium, 2.18 wt. % tungsten, 1.00 wt. % boron, 0.05 wt. % carbon, 0.05 wt. % zirconium, and a balance of nickel and minor amounts of impurities.

5. The nickel braze alloy of any one of the preceding claims, wherein the alloy is a foil, tape, cloth, powder, or slurry, preferably wherein the alloy is a foil.

6. The nickel braze alloy of claim 5, wherein the foil has a thickness of from 1.0 mils (25.4 microns) to 1.5 mils (38.1 microns).

7. A method of joining a first superalloy component with a first joining surface to a second superalloy component with a second joining surface along the matching joining surfaces comprises:
forming an assembly wherein the first component and the second component are positioned such that the first and second joining surfaces are facing each other with a layer of transient liquid phase brazing alloy therebetween having the following composition:
less than 2.0 wt. % aluminum, 18.0-23.0 wt. % cobalt, 12.0-15.0 wt. % chromium, 3.8-4.5 wt. % molybdenum, 0.8-1.5 wt. % niobium, 1.8-3.0 wt. % tantalum, less than 2.0 wt. % titanium, 2.0-3.5 wt. % tungsten, 0.8-1.2 wt. % boron, 0.02-0.10 wt. % carbon, 0.03-0.06 wt. % zirconium, and a balance of nickel and minor amounts of impurities on the first and/or second joining surfaces;
heating the assembly to a predetermined temperature such that the transient liquid phase brazing alloy melts and the first and second superalloy joining surfaces do not melt; and
holding the assembly at the predetermined temperature for a predetermined amount of time wherein the brazing alloy isothermally solidifies and forms a metallurgical bond between the first and second superalloy components.

8. The method of claim 7, wherein the transient liquid phase brazing alloy has the following composition:
less than 1.8 wt. % aluminum, 20.0-22.0 wt. % cobalt, 13.0-14.5 wt. % chromium, 3.9-4.3 wt. % molybdenum, 0.9-1.0 wt. % niobium, 2.0-2.5 wt. % tantalum, less than 1.95 wt. % titanium, 2.1-3.0 wt. % tungsten, 0.9-1.7 wt. % boron, 0.04-0.06 wt. % carbon, 0.04-0.06 wt. % zirconium, and a balance of nickel and minor amounts of impurities.

9. The method of claim 7, wherein the transient liquid phase brazing alloy has the following composition:
21.90 wt. % cobalt, 14.00 wt. % chromium, 4.10 wt. % molybdenum, 0.97 wt. % niobium, 2.58 wt. % tantalum, 2.26 wt. % tungsten, 1.00 wt. % boron, 0.05 wt. % carbon, 0.05 wt. % zirconium, and a balance of nickel and minor amounts of impurities.

10. The method of claim 7 or claim 8, wherein the transient liquid phase brazing alloy has the following composition:
1.73 wt. % aluminum, 21.10 wt. % cobalt, 13.48 wt. % chromium, 3.94 wt. % molybdenum, 0.93 wt. % niobium, 2.48 wt. % tantalum, 1.92 wt. % titanium, 2.18 wt. % tungsten, 1.00 wt. % boron, 0.05 wt. % carbon, 0.05 wt. % zirconium, and a balance of nickel and minor amounts of impurities.

11. The method of any one of claims 7-10, wherein the transient liquid phase brazing alloy is a foil, tape, cloth, powder, or slurry, preferably wherein the transient liquid phase brazing alloy is a foil.

12. The method of claim 11, wherein the foil has a thickness of from 1.0 mils (25.4 microns) to 1.5 mils (38.1 microns).

13. The method of any one of claims 7-12, wherein the first component is made of an alloy with the following composition:
2.6-4.8 wt. % aluminum, 16.0-22.4 wt. % cobalt, 6.6-14.3 wt. % chromium, 1.9-3.9 wt. % molybdenum, 0.9-3.0 wt. % niobium, 1.4-3.5 wt. % tantalum, 2.4-4.6 wt. % titanium, 1.9-4.0 wt. % tungsten, 0.02-0.10 wt. % boron, 0.02-0.10 wt. % carbon, 0.03-0.10 wt. % zirconium, and a balance of nickel and minor amounts of impurities.

14. The method of any one of claims 7-13, wherein the second component is made of an alloy with the following composition:
3.10-3.75 wt. % aluminum, 20.0-22.0 wt. % cobalt, 9.5-11.25 wt. % chromium, 2.8-4.2 wt. % molybdenum, 1.6-2.4 wt. % niobium, 4.2-6.1 wt. % tantalum, 2.6-3.5 wt. % titanium, 1.8-2.5 wt. % tungsten, 0.02-0.09 wt. % boron, 0.02-0.09 wt. % carbon, 0.04-0.09 wt. % zirconium, and a balance of nickel and minor amounts of impurities.

15. The method of any one of claims 7-13, wherein the second component is made of an alloy with the following composition: 3.2-
4.1 wt. % aluminum, 20.0-22.0 wt. % cobalt, 8-10.5 wt. % chromium, 2.8-3.1 wt. % molybdenum, 1.6-2.4 wt. % niobium, 2.5-7.3 wt. % tantalum, 2.6-3.6 wt. % titanium, 2.8-3.3 wt. % tungsten, 0.02-0.09 wt. % boron, 0.02-0.09 wt. % carbon, 0.04-0.09 wt. % zirconium, and a balance of nickel and minor amounts of impurities.

## Patentansprüche

1. Nickel-Hartlötlegierung, umfassend in Kombination weniger als 2,0 Gew.-% Aluminium, 18,0-23,0 Gew.-% Kobalt, 12,0-15,0 Gew.-% Chrom, 3,8-4,5 Gew.-% Molybdän, 0,8-1,5 Gew.-% Niob, 1,8-3,0 Gew.-% Tantal, weniger als 2,0 Gew.-% Titan, 2,0-3,5 Gew.-% Wolfram, 0,8-1,2 Gew.-% Bor, 0,02-0,10 Gew.-% Kohlenstoff, 0,03-0,06 Gew.-% Zirconium und einen Rest Nickel und geringe Mengen von Verunreinigungen.

2. Nickel-Hartlötlegierung nach Anspruch 1, wobei die Zusammensetzung weniger als 1,8 Gew.-% Aluminium, 20,0-22,0 Gew.-% Kobalt, 13,0-14,5 Gew.-% Chrom, 3,9-4,3 Gew.-% Molybdän, 0,9-1,0 Gew.-% Niob, 2,0-2,5 Gew.-% Tantal, weniger als 1,95 Gew.-% Titan, 2,1-3,0 Gew.-% Wolfram, 0,9-1,1 Gew.-% Bor, 0,04-0,06 Gew.-% Kohlenstoff, 0,04-0,06 Gew.-% Zirconium und einen Rest Nickel und geringe Mengen von Verunreinigungen umfasst.

3. Nickel-Hartlötlegierung nach Anspruch 1, wobei die Zusammensetzung 21,90 Gew.-% Kobalt, 14,00 Gew.-% Chrom, 4,10 Gew.-% Molybdän, 0,97 Gew.-% Niob, 2,58 Gew.-% Tantal, 2,26 Gew.-% Wolfram, 1,00 Gew.-% Bor, 0,05 Gew.-% Kohlenstoff, 0,05 Gew.-% Zirconium und einen Rest Nickel und geringe Mengen von Verunreinigungen umfasst.

4. Nickel-Hartlötlegierung nach Anspruch 1 oder Anspruch 2, wobei die Zusammensetzung 1,73 Gew.-% Aluminium, 21,10 Gew.-% Kobalt, 13,48 Gew.-% Chrom, 3,94 Gew.-% Molybdän, 0,93 Gew.-% Niob, 2,48 Gew.-% Tantal, 1,92 Gew.-% Titan, 2,18 Gew.-% Wolfram, 1,00 Gew.-% Bor, 0,05 Gew.-% Kohlenstoff, 0,05 Gew.-% Zirconium und einen Rest Nickel und geringe Mengen von Verunreinigungen umfasst.

5. Nickel-Hartlötlegierung nach einem der vorstehenden Ansprüche, wobei die Legierung eine Folie, ein Band, ein Tuch, ein Pulver oder eine Schlämme ist, vorzugsweise wobei die Legierung eine Folie ist.

6. Nickel-Hartlötlegierung nach Anspruch 5, wobei die Folie eine Dicke von 1,0 Millizoll (25,4 Mikrometer) bis 1,5 Millizoll (38,1 Mikrometer) aufweist.

7. Verfahren zum Verbinden einer ersten Superlegierungskomponente mit einer ersten Verbindungsfläche mit einer zweiten Superlegierungskomponente mit einer zweiten Verbindungsfläche entlang der passenden Verbindungsflächen, umfassend:
Herstellen einer Baugruppe, wobei die erste Komponente und die zweite Komponente so positioniert sind, dass sich die erste und die zweite Verbindungsfläche gegenüberliegen, wobei eine Schicht einer Hartlötlegierung mit temporärer flüssiger Phase dazwischen die folgende Zusammensetzung aufweist:
weniger als 2,0 Gew.-% Aluminium, 18,0-23,0 Gew.-% Kobalt, 12,0-15,0 Gew.-% Chrom, 3,8-4,5 Gew.-% Molybdän, 0,8-1,5 Gew.-% Niob, 1,8-3,0 Gew.-% Tantal, weniger als 2,0 Gew.-% Titan, 2,0-3.5 Gew.-% Wolfram, 0,8-1,2 Gew.-% Bor, 0,02-0,10 Gew.-% Kohlenstoff, 0,03-0,06 Gew.-% Zirconium und ein Rest Nickel und kleinere Mengen von Verunreinigungen auf der ersten und/oder der zweiten Verbindungsfläche;
Erwärmen der Baugruppe auf eine vorgegebene Temperatur, so dass die Hartlötlegierung mit temporärer flüssiger Phase schmilzt und die erste und die zweite Verbindungsfläche mit Superlegierung nicht schmelzen; und
Halten der Baugruppe auf der vorgegebenen Temperatur für einen vorgegebenen Zeitraum, in dem die Hartlötlegierung isotherm erstarrt und eine metallurgische Bindung zwischen der ersten und der zweiten Superlegierungskomponente herstellt.

8. Verfahren nach Anspruch 7, wobei die Hartlötlegierung mit temporärer flüssiger Phase die folgende Zusammensetzung aufweist:
weniger als 1,8 Gew.-% Aluminium, 20,0-22,0 Gew.-% Kobalt, 13,0-14,5 Gew.-% Chrom, 3,9-4,3 Gew.-% Molybdän, 0,9-1,0 Gew.-% Niob, 2,0-2,5 Gew.-% Tantal, weniger als 1,95 Gew.-% Titan, 2,1-3,0 Gew.-% Wolfram, 0,9-1,7 Gew.-% Bor, 0,04-0,06 Gew.-% Kohlenstoff, 0,04-0,06 Gew.-% Zirconium und ein Rest Nickel und kleinere Mengen von Verunreinigungen.

9. Verfahren nach Anspruch 7, wobei die Hartlötlegierung mit temporärer flüssiger Phase die folgende Zusammensetzung aufweist:
21,90 Gew.-% Kobalt, 14,00 Gew.-% Chrom, 4,10 Gew.-% Molybdän, 0,97 Gew.-% Niob, 2,58 Gew.-% Tantal, 2,26 Gew.-% Wolfram, 1,00 Gew.-% Bor, 0,05 Gew.-% Kohlenstoff, 0,05 Gew.-% Zirconium und ein Rest Nickel und kleinere Mengen von Verunreinigungen.

10. Verfahren nach Anspruch 7 oder Anspruch 8, wobei die Hartlötlegierung mit temporärer flüssiger Phase die folgende Zusammensetzung aufweist:
1,73 Gew.-% Aluminium, 21,10 Gew.-% Kobalt, 13,48 Gew.-% Chrom, 3,94 Gew.-% Molybdän, 0,93 Gew.-% Niob, 2,48 Gew.-% Tantal, 1,92 Gew.-% Titan, 2,18 Gew.-% Wolfram, 1,00 Gew.-% Bor, 0,05 Gew.-% Kohlenstoff, 0,05 Gew.-% Zirconium und ein Rest Nickel und kleinere Mengen von Verunreinigungen.

11. Verfahren nach einem der Ansprüche 7-10, wobei die Hartlötlegierung mit temporärer flüssiger Phase eine Folie, ein Band, ein Tuch, ein Pulver oder eine Schlämme ist, vorzugsweise wobei die Hartlötlegierung mit temporärer flüssiger Phase eine Folie ist.

12. Verfahren nach Anspruch 11, wobei die Folie eine Dicke von 1,0 Millizoll (25,4 Mikrometer) bis 1,5 Millizoll (38,1 Mikrometer) aufweist.

13. Verfahren nach einem der Ansprüche 7-12, wobei die erste Komponente aus einer Legierung mit der folgenden Zusammensetzung hergestellt ist:
2,6-4,8 Gew.-% Aluminium, 16,0-22,4 Gew.-% Kobalt, 6,6-14,3 Gew.-% Chrom, 1,9-3,9 Gew.-% Molybdän, 0,9-3,0 Gew.-% Niob, 1,4-3,5 Gew.-% Tantal, 2,4-4,6 Gew.-% Titan, 1,9-4,0 Gew.-% Wolfram, 0,02-0,10 Gew.-% Bor, 0,02-0,10 Gew.-% Kohlenstoff, 0,03-0,10 Gew.-% Zirconium und ein Rest Nickel und kleinere Mengen von Verunreinigungen.

14. Verfahren nach einem der Ansprüche 7-13, wobei die zweite Komponente aus einer Legierung mit der folgenden Zusammensetzung hergestellt ist:
3,10-3,75 Gew.-% Aluminium, 20,0-22,0 Gew.-% Kobalt, 9,5-11,25 Gew.-% Chrom, 2,8-4,2 Gew.-% Molybdän, 1,6-2,4 Gew.% Niob, 4,2-6,1 Gew.-% Tantal, 2,6-3,5 Gew.-% Titan, 1,8-2,5 Gew.-% Wolfram, 0,02-0,09 Gew.-% Bor, 0,02-0,09 Gew.-% Kohlenstoff, 0,04-0,09 Gew.-% Zirconium und ein Rest Nickel und kleinere Mengen von Verunreinigungen.

15. Verfahren nach einem der Ansprüche 7-13, wobei die zweite Komponente aus einer Legierung mit der folgenden Zusammensetzung hergestellt ist:
3,2-4,1 Gew.-% Aluminium, 20,0-22,0 Gew.-% Kobalt, 8-10,5 Gew.-% Chrom, 2,8-3,1 Gew.-% Molybdän, 1,6-2,4 Gew.-% Niob, 2,5-7,3 Gew.-% Tantal, 2,6-3,6 Gew.-% Titan, 2,8-3,3 Gew.-% Wolfram, 0,02-0,09 Gew.-% Bor, 0,02-0,09 Gew.-% Kohlenstoff, 0,04-0,09 Gew.-% Zirconium und ein Rest Nickel und kleinere Mengen von Verunreinigungen.

## Revendications

1. Alliage de brasage à base de nickel comprenant en combinaison moins de 2,0 % en poids d'aluminium, de 18,0 à 23,0 % en poids de cobalt, de 12,0 à 15,0 % en poids de chrome, de 3,8 à 4,5 % en poids de molybdène, de 0,8 à 1,5 % en poids de niobium, de 1,8 à 3,0 % en poids de tantale, moins de 2,0 % en poids de titane, de 2,0 à 3,5 % en poids de tungstène, de 0,8 à 1,2 % en poids de bore, de 0,02 à 0,10 % en poids de carbone, de 0,03 à 0,06 % en poids de zirconium, et un reste de nickel et de faibles quantités d'impuretés.

2. Alliage de brasage à base de nickel selon la revendication 1, dans lequel la composition comprend moins de 1,8 % en poids d'aluminium, de 20,0 à 22,0 % en poids de cobalt, de 13,0 à 14,5 % en poids de chrome, de 3,9 à 4,3 % en poids de molybdène, de 0,9 à 1,0 % en poids de niobium, de 2,0 à 2,5 % en poids de tantale, moins de 1,95 % en poids de titane, de 2,1 à 3,0 % en poids de tungstène, de 0,9 à 1,1 % en poids de bore, de 0,04 à 0,06 % en poids de carbone, de 0,04 à 0,06 % en poids de zirconium, et un reste de nickel et de faibles quantités d'impuretés.

3. Alliage de brasage à base de nickel selon la revendication 1, dans lequel la composition comprend 21,90 % en poids de cobalt, 14,00 % en poids de chrome, 4,10 % en poids de molybdène, 0,97 % en poids de niobium, 2,58 % en poids de tantale, 2,26 % en poids de tungstène, 1,00 % en poids de bore, 0,05 % en poids de carbone, 0,05 % en poids de zirconium, et un reste de nickel et de faibles quantités d'impuretés.

4. Alliage de brasage à base de nickel selon la revendication 1 ou la revendication 2, dans lequel la composition comprend 1,73 % en poids d'aluminium, 21,10 % en poids de cobalt, 13,48 % en poids de chrome, 3,94 % en poids de molybdène, 0,93 % en poids de niobium, 2,48 % en poids de tantale, 1,92 % en poids de titane, 2,18 % en poids de tungstène, 1,00 % en poids de bore, 0,05 % en poids de carbone, 0,05 % en poids de zirconium, et un reste de nickel et de faibles quantités d'impuretés.

5. Alliage de brasage à base de nickel selon l'une quelconque des revendications précédentes, dans lequel l'alliage est une feuille, un ruban, un tissu, une poudre ou une suspension, de préférence dans lequel l'alliage est une feuille.

6. Alliage de brasage à base de nickel selon la revendication 5, dans lequel la feuille a une épaisseur comprise entre 1,0 millième de pouce (25,4 microns) et 1,5 millième de pouce (38,1 microns).

7. Procédé de jonction d'un premier composant de superalliage avec une première surface de jonction à un second composant de superalliage avec une seconde surface de jonction le long des surfaces de jonction qui coïncident, comprenant :
la formation d'un ensemble dans lequel le premier composant et le second composant sont positionnés de telle sorte que les première et seconde surfaces de jonction se font face avec une couche d'alliage de brasage en phase liquide transitoire entre elles, présentant la composition suivante :
moins de 2,0 % en poids d'aluminium, de 18,0 à 23,0 % en poids de cobalt, de 12,0 à 15,0 % en poids de chrome, de 3,8 à 4,5 % en poids de molybdène, de 0,8 à 1,5 % en poids de niobium, de 1,8 à 3,0 % en poids de tantale, moins de 2,0 % en poids de titane, de 2,0 à 3,5 % en poids de tungstène, de 0,8 à 1,2 % en poids de bore, de 0,02 à 0,10 % en poids de carbone, de 0,03 à 0,06 % en poids de zirconium et un reste de nickel et de faibles quantités d'impuretés sur les première et/ou secondes surfaces de jonction ;
le chauffage de l'ensemble à une température prédéterminée de telle sorte que l'alliage de brasage en phase liquide transitoire fond et que les première et seconde surfaces de jonction de superalliage ne fondent pas ; et
le maintien de l'ensemble à la température prédéterminée pendant une durée prédéterminée, dans lequel l'alliage de brasage se solidifie de manière isotherme et forme une liaison métallurgique entre les premier et second composants de superalliage.

8. Procédé selon la revendication 7, dans lequel l'alliage de brasage en phase liquide transitoire présente la composition suivante :
moins de 1,8 % en poids d'aluminium, de 20,0 à 22,0 % en poids de cobalt, de 13,0 à 14,5 % en poids de chrome, de 3,9 à 4,3 % en poids de molybdène, de 0,9 à 1,0 % en poids de niobium, de 2,0 à 2,5 % en poids de tantale, moins de 1,95 % en poids de titane, de 2,1 à 3,0 % en poids de tungstène, de 0,9 à 1,7 % en poids de bore, de 0,04 à 0,06 % en poids de carbone, de 0,04 à 0,06 % en poids de zirconium, et un reste de nickel et de faibles quantités d'impuretés.

9. Procédé selon la revendication 7, dans lequel l'alliage de brasage en phase liquide transitoire présente la composition suivante :
21,90 % en poids de cobalt, 14,00 % en poids de chrome, 4,10 % en poids de molybdène, 0,97 % en poids de niobium, 2,58 % en poids de tantale, 2,26 % en poids de tungstène, 1,00 % en poids de bore, 0,05 % en poids de carbone, 0,05 % en poids de zirconium, et un reste de nickel et de faibles quantités d'impuretés.

10. Procédé selon la revendication 7 ou la revendication 8, dans lequel l'alliage de brasage en phase liquide transitoire présente la composition suivante :
1,73 % en poids d'aluminium, 21,10 % en poids de cobalt, 13,48 % en poids de chrome, 3,94 % en poids de molybdène, 0,93 % en poids de niobium, 2,48 % en poids de tantale, 1,92 % en poids de titane, 2,18 % en poids de tungstène, 1,00 % en poids de bore, 0,05 % en poids de carbone, 0,05 % en poids de zirconium, et un reste de nickel et de faibles quantités d'impuretés.

11. Procédé selon l'une quelconque des revendications 7 à 10, dans lequel l'alliage de brasage en phase liquide transitoire est une feuille, un ruban, un tissu, une poudre ou une suspension, de préférence dans lequel l'alliage de brasage en phase liquide transitoire est une feuille.

12. Procédé selon la revendication 11, dans lequel la feuille a une épaisseur comprise entre 1,0 millième de pouce (25,4 microns) et 1,5 millième de pouce (38,1 microns).

13. Procédé selon l'une quelconque des revendications 7 à 12, dans lequel le premier composant est constitué d'un alliage avec la composition suivante :
de 2,6 à 4,8 % en poids d'aluminium, de 16,0 à 22,4 % en poids de cobalt, de 6,6 à 14,3 % en poids de chrome, de 1,9 à 3,9 % en poids de molybdène, de 0,9 à 3,0 % en poids de niobium, de 1,4 à 3,5 % en poids de tantale, de 2,4 à 4,6 % en poids de titane, de 1,9 à 4,0 % en poids de tungstène, de 0,02 à 0,10 % en poids de bore, de 0,02 à 0,10 % en poids de carbone, de 0,03 à 0,10 % en poids de zirconium, et un reste de nickel et de faibles quantités d'impuretés.

14. Procédé selon l'une quelconque des revendications 7 à 13, dans lequel le premier composant est constitué d'un alliage avec la composition suivante :
de 3,10 à 3,75 % en poids d'aluminium, de 20,0 à 22,0 % en poids de cobalt, de 9,5 à 11,25 % en poids de chrome, de 2,8 à 4,2 % en poids de molybdène, de 1,6 à 2,4 % en poids de niobium, de 4,2 à 6,1 % en poids de tantale, de 2,6 à 3,5 % en poids de titane, de 1,8 à 2,5 % en poids de tungstène, de 0,02 à 0,09 % en poids de bore, de 0,02 à 0,09 % en poids de carbone, de 0,04 à 0,09 % en poids de zirconium, et un reste de nickel et de faibles quantités d'impuretés.

15. Procédé selon l'une quelconque des revendications 7 à 13, dans lequel le second composant est constitué d'un alliage avec la composition suivante :
de 3,2 à 4,1 % en poids d'aluminium, de 20,0 à 22,0 % en poids de cobalt, de 8 à 10,5 % en poids de chrome, de 2,8 à 3,1 % en poids de molybdène, de 1,6 à 2,4 % en poids de niobium, de 2,5 à 7,3 % en poids de tantale, de 2,6 à 3,6 % en poids de titane, de 2,8 à 3,3 % en poids de tungstène, de 0,02 à 0,09 % en poids de bore, de 0,02 à 0,09 % en poids de carbone, de 0,04 à 0,09 % en poids de zirconium, et un reste de nickel et de faibles quantités d'impuretés.
